# EUROPEAN PATENT SPECIFICATION

(11) **EP 0 589 489 B1**
(45) Date of publication and mention of the grant of the patent: **04.06.1997**
(21) Application number: 93118130.9
(22) Date of filing: 28.01.1989
(51) Int. Cl.: B29C 45/42, B29C 45/12

(54) **Sequential injection molding machine**
Sequentielle Spritzgiessmaschine
Machine à mouler par injection séquentielle

(30) Priority: 29.01.1988 US 150157; 06.01.1989 US 294308
(43) Date of publication of application: 30.03.1994
(62) Divisional of application: 89101507.5
(73) Proprietor: HUSKY INJECTION MOLDING SYSTEMS LTD., Bolton Ontario L7E 5S5 (CA)
(72) Inventor: Schad, Robert D., Toronto, Ontario (CA); Brown, Paul B., Orangeville, Ontario L9W 2Y9 (CA)
(74) Representative: Weiss, Peter, Dr. rer. nat.

(56) References cited:
- EP-A- 0 214 482
- EP-A- 0 218 101
- FR-A- 2 586 377
- JP-A-63 004 923 (SUMITOMO HEAVY IND LTD) & PATENT ABSTRACTS OF JAPAN vol. 12, no. 197 (M-706)(3044) 8 June 1988

## Description

The present invention relates to injection molding machines according to claim 1.

The EP-A-0 214 482 discloses an injection molding machine having one molding station for forming articles and one molded article remove unit. The present invention relates, in particular, to such machines having the capability of operating a plurality of molds arranged in series.

The JP-A-63004923 discloses an injection molding machine having at least two molding stations each molding station including a pair of platens to actuate mold halves to open and close in one direction, a molded article removal unit. The machine further comprising: a machine frame, members mounted movably on said frame, means for moving said members to and fro relative to said frame and perpendicular to said one direction, molded article removal heads mounted fixedly on said members, and means for moving said members perpendicular to the machine in synchronism with the opening and closing cycle of molding stations, whereby the removal head enters at least one open mold and is positioned in register with al least one molded article.

Oposite thereto the present invention relates to injection molding machine having plurality of molding stations with a plurality of machine accessories arranged in various combinations developing a sequence of operations calculated to reduce molding cycle time per part particularly when molding large parts, such as large containers or autobody parts.

It is a primary feature of the present invention to provide an injection molding machine which enables the mold assemblies to be operable independently of each other and to be readily separable from the machine.

A still further feature of this invention is the incorporation, into a multi-station injection molding machine, of a parts removal device or robot which is operable to remove parts molded in reverse or in identical orientation at each station.

### SUMMARY OF THE INVENTION

According to claim 1 an injection molding machine embracing features of the present invention includes, in one combination or another, a main frame, fixed and movable platens to support mold halves.

Further, the machine includes ejection means and a parts remover (robot) which operates on rectilinear coordinates to move from molding station to molding station along a first axis and into and out of an open mold along a second axis.

Product may be molded in the same or in reverse orientation with appropriate modification of the parts remover and the flow path of the molten plastic.

In reverse orientation, the remover head carries dual "pick up" elements, while product molded in same orientation is grasped by a remover head with a single pick up.

Other features and advantages of the present invention will become more apparent from an examination of the succeeding specification when read in conjunction with the appended drawings, in which:

### BRIEF DESCRIPTION OF THE DRAWINGS

Fig. 1 is a side of the machine with the molded parts remover or robot in an open mold retrieving a part;
Fig. 2 is a top plan view of the illustration of Fig. 1;
Fig. 3 is similar to Fig. 2 showing the robot in the opposite molding station;
Fig. 4 is a plot of the machine sequence of operation charting the position of the various machine accessories against the step by step generation of the molded parts;
Fig. 5 is a side view of an additional machine modification showing double sets of primary and secondary injection means and robots servicing four mold stations;
Fig. 6 is a chart detailing the operating sequence of the machine of Fig. 5.

### DETAILED DESCRIPTION OF THE PREFERRED EMBODIMENTS

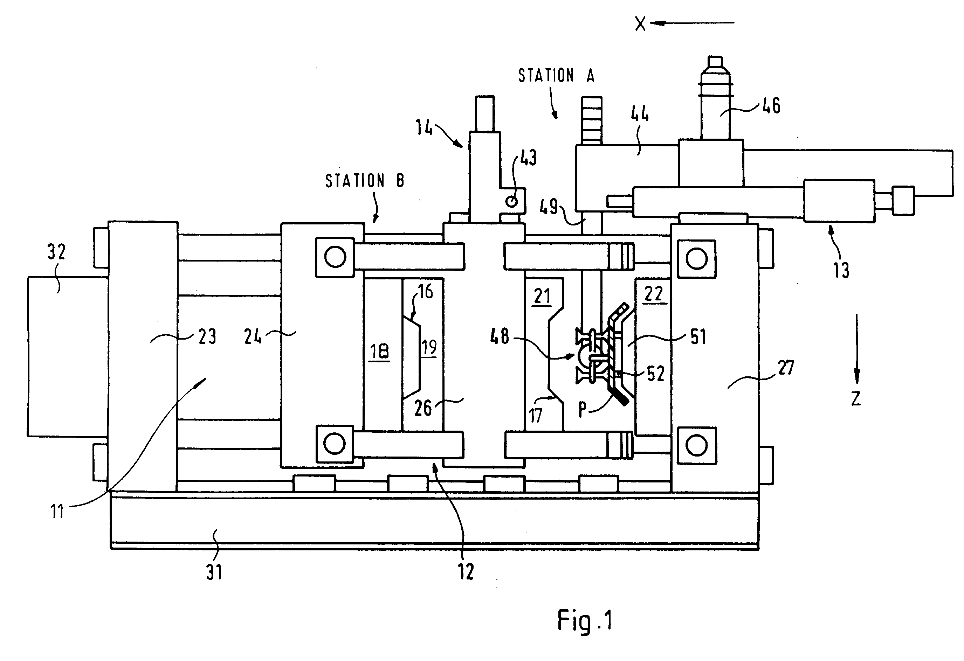

Referring to Figs. 1, 2 and 3, a basic embodiment of the injection molding machine of the present invention is disclosed comprising molding stations A and B having essential accessories defining a primary clamp section 11, a secondary clamp section 12, a primary molten plastic injection section 13 and a secondary injection section 14. Either the primary and/or secondary injection unit may be of the reciprocating screw type or piston type.

Molds 16 and 17, frequently of different configurations, comprise mold halves 18 and 19 and 21 and 22, respectively.

Mold halves 19 and 21 are mounted on central movable platen 26 and halves 18 and 22 are mounted on movable platen 24 and fixed platen 27, respectively.

Platens 23 and 27, fixed to the machine frame 31, support tie bars 28 and 29 in the usual and customary fashion.

Platen 24 is connected to primary clamping piston 32 and is reciprocated thereby sliding on tie bars 28 and 29.

Central platen 26 is also movable on tie bars 28 and 29 and is releasably connected to movable platen 24 and fixed platen 27 by secondary clamping means 12 in a manner which will be explained in greater detail as this specification proceeds.

Typically, the injection section 13 includes a plasticizing- injection unit referred to in the art as a reciprocating-screw extruder.

Figs. 1, 2 and 3 show details of one embodiment of the secondary clamp means and the structure and operation of the molded parts removal unit or robot.

Referring to Fig. 1, the parts removal unit operates automatically in time sequence, in robot fashion, and includes a first leg 44 which reciprocates under control of power unit 46 along the longitudinal axis (x axis) of the machine quided by a track (not shown). The power unit 46 is supported by fixed platen 27.

When the part removal head 48 is in register with an open mold, such as the open mold at station A in Fig. 1, a second leg 49 is actuated by suitable power means to advance the head along a second axis (z axis) into register with finished part P. The part is then ejected from core 51 by ejector pins 52, in well known fashion, and picked up by the head.

The head 48 is provided with a source of vacuum and a valve operable to direct vacuum to the part side of the head where upon the part P is grasped and drawn away from the core by the head. The head is retracted automatically and the part P released to an appropriate container (not shown) for packaging or further processing, as the case may be.

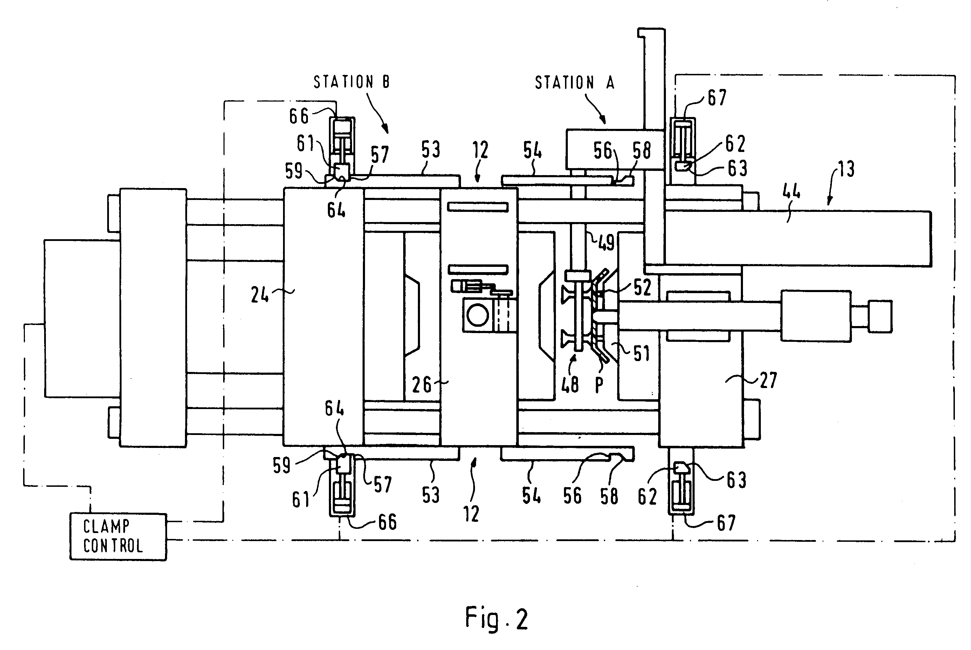

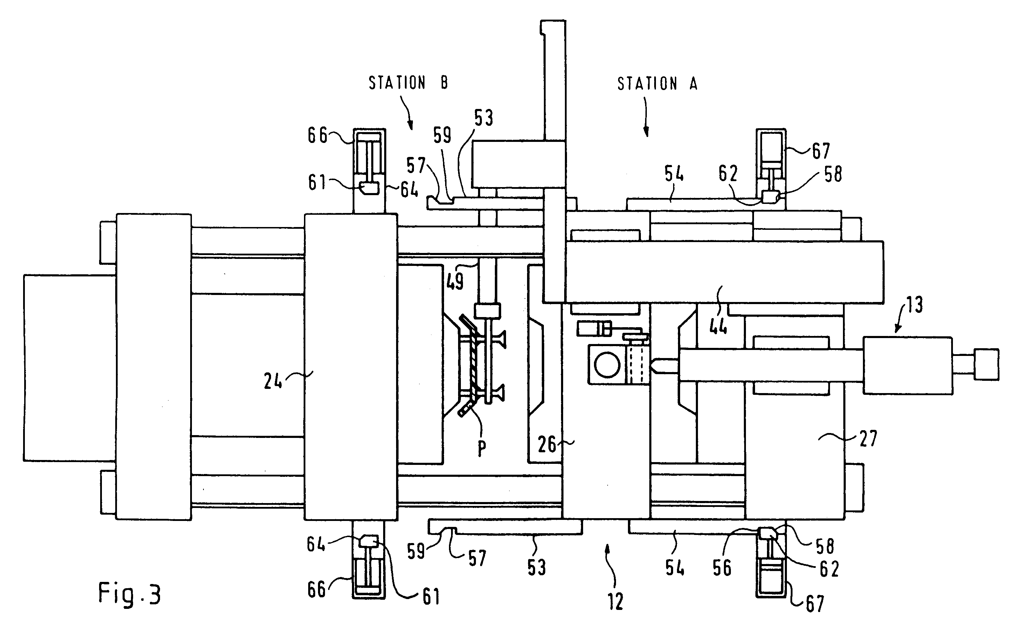

Figs. 2 and 3 are top plan views of the illustration of Fig. 1 and show details and operation of one embodiment of the secondary clamp section indicated generally by the reference numeral 12.

Pairs of opposed arms 53 and 54, fixed to central platen 26, are formed with notches 56 and 57 and cam faces 58 and 59. The notches are engaged by dogs or lugs 61 and 62 having mating cam faces 63 and 64. The lugs 61 and 62, operable to reciprocate in timed sequence under the control of piston-cyclinder assemblies 66 and 67, are mounted on the movable platen 24 and fixed platen 27, respectively.

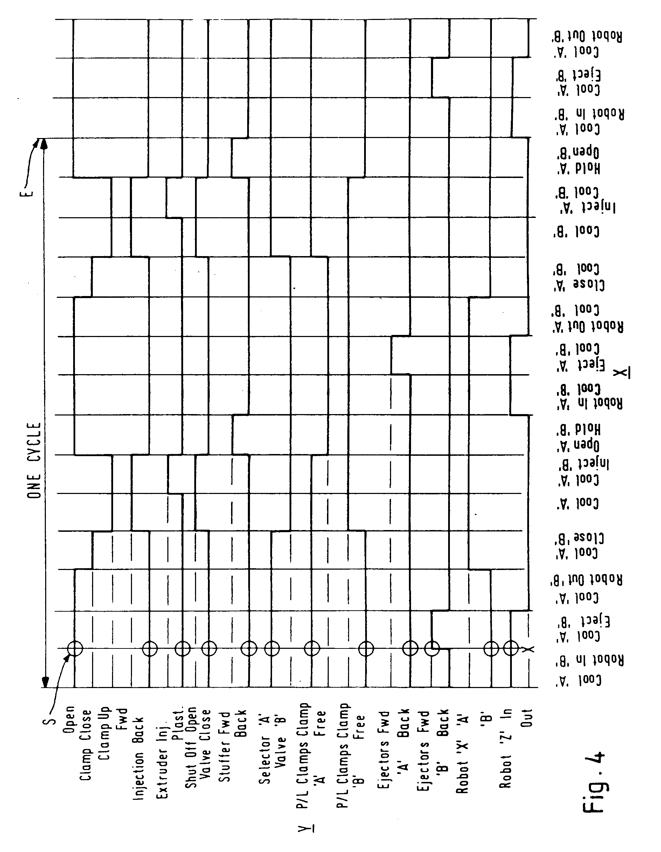

As mold halves of a given mold station approach their closed position, the lugs move into mating notches and mating cam faces engage one another to drive the mold halves into tight face to face contact holding the mold halves sealed during cavity stuffing and subsequent cooling period independently of the primary clamp means in a manner and according to an operating sequence set forth in cycle chart of Fig. 4.

Fig. 3 shows the part removal head 48 in place in the open mold at station B poised to retract from the mold to transfer part P out of the machine.

In this position the vaccum of the head 48 has been diverted from the right side of the head to the left side of the head as viewed in Fig. 3 to accomplish the part pick up at station B.

Referring in detail to Fig. 4, a plot showing a typical molding cycle of the machine of Figs. 1 through 3 is laid out coordinately where the y axis is a schedule of sequential positions of the various machine components or accessories for stations A and B, and the x axis is a schedule of the progress of the part through the molding steps.

The chart is read in the following fashion: starting at the upper left hand corner at the point indicated by the letter S, one "picks up" the molding cycle by noting the small circles extending along the y axis which indicate the primary clamp 11 is open, injection section 13 is back (to the right in Fig. 1), the injection section 13 is plasticizing, secondary clamp section 12 is clamping station A, secondary clamp 12 at station B is free (open), ejector pins 52 are retracted at station A, ejector pins are forward (ejecting) at station B, robot or pick up head 48 has moved along machine x axis to station B and along the z axis into the mold at station B.

Referring to the point x at the lower left corner of the chart of Fig. 4, it is apparent when the various machine elements are in the positions just indicated by "reading" the chart a molded part is cooling in its mold at station A and the robot or pick up head 48 is positioned in the open mold at station B.

The chart is read in the manner described incrementally from left to right, the machine having produced two parts P upon arriving at end E of a complete cycle.

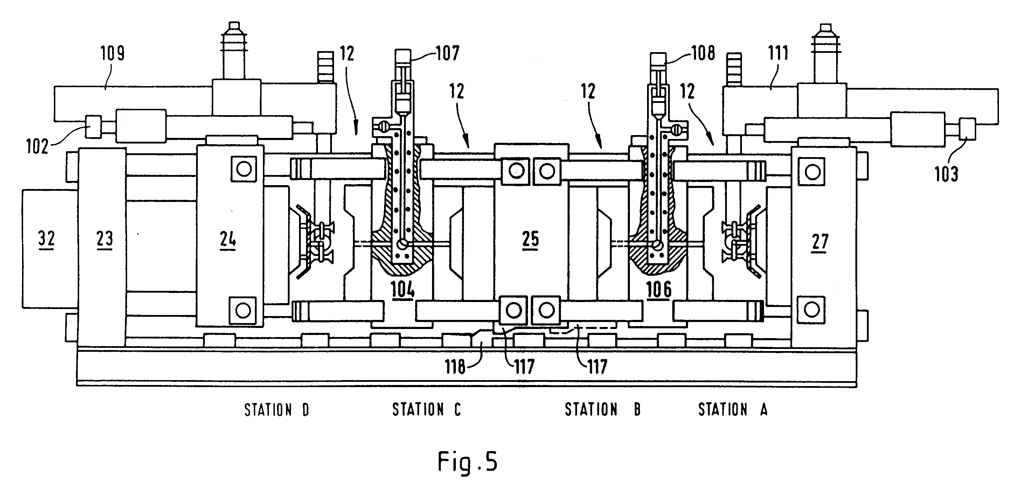

Fig. 5 illustrates a double capacity machine in which there are four molding stations A, B, C and D, two opposed primary injection extruders 102 and 103 with two central mold platens 104 and 106 each incorporating a secondary extrusion units or stuffers 107 and 108, in the fashion and for the purpose previously described, for servicing mold stations D and C on the left and mold stations B and A on the right, respectively. The reference numerals 109 and 111 designate mold part removal units or robots. Naturally, each mold station could have a plurality of molds as required.

Hereagain, the location of primary injecting units is a matter of design choice based on machine size limitations and available operating space.

The machine configuration of Fig. 5 shows the molds open at station A and D while the molds at stations B and C are closed.

This configuration is developed in the following fashion.

Assume that the primary clamping means actuated by piston 32 has moved all movable platens 24, 104, 25 and 106 to the right against stationary platen 27 closing all molds at stations A, B, C and D with all secondary clamps 12-12 latched.

Upon an appropriate signal from the clamp control (Figure 2), the secondary clamp 12 at station A is released while the secondary clamps 12 at stations B, C and D remain latched.

The piston 32 is ordered to move to the left. This occurrence opens the mold at staion A and dog 117 secured to movable platen 25 moves from the dashed line position to the solid line position to abut stop 118.

Contact between the dog 117 and stop 118 stops movable platen 106 in the position shown in Fig. 14 and blocks further separation of mold halves at station A.

Upon the occurrence of the above-noted abutment and in timed sequence, the secondary clamp at station D is unlatched so that upon continued motion of the piston 32 to the left the mold at station D opens to complete development of the mold layout shown in Fig. 5, i.e. molds at stations A and D are open and molds at stations B and C remain closed and clamped.

Again starting from a closed mold position at stations A, B, C and D, the molds at stations B and C are opened in similar fashion in response to the appropriate signals from the clamp control unit.

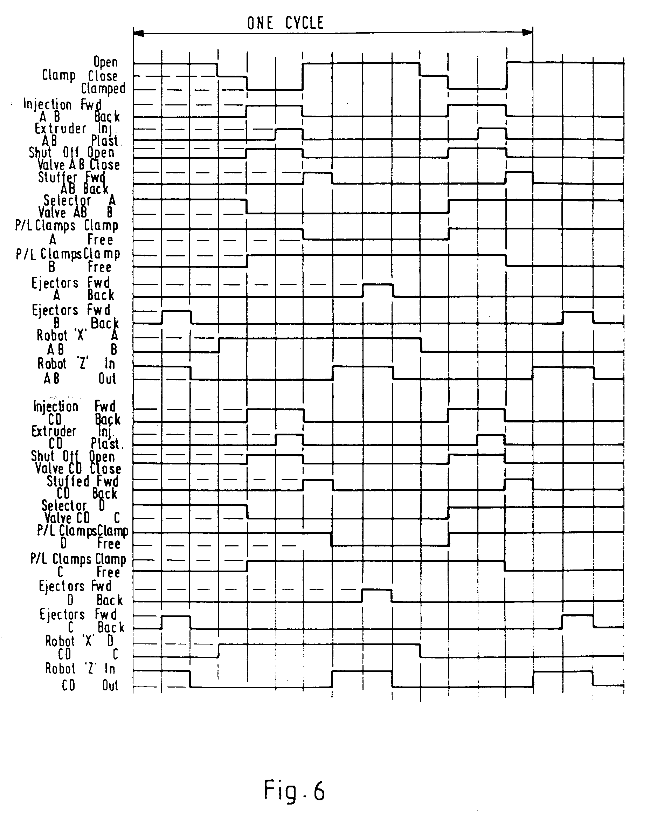

Fig. 6 is an operating schedule showing the sequential positions of the various machine accessories as the double capacity unit of Fig. 5 operates to produce four molded parts per cycle.

## Claims

1. An injection molding machine having at least two molding stations (A, B) each molding station (A, B) including a pair of platens (24, 26 and 27) to actuate mold halves (18, 19, 21, 22) to open and close in sequential fashion, a molded article removal unit (44 - 49, 109, 111) comprising:
a machine frame (31),
a first member (44) mounted movably on said frame (31),
means for moving first member (44) to and fro relative to said frame (31) with respect to at least one first axis,
a second member (49) mounted movably on said first member (44),
means for moving said second member (49) to and fro relative to said first member (44) with respect to at least one second axis,
a molded article removal head (48) mounted fixedly on said second member (49), and
means for moving said first and second members (44, 49) relative to the machine and relative to one another along said first and second axes and for positioning article removal head (48) in synchronism with the opening and closing cycle of molding stations (A, B), which are operable independently of each other,
whereby the removal head (48) enters at least one open mold (16, 17) and afterwards is positioned in register to enter and unload another subsequently opened molding station.

2. The molding machine of claim 1 in which said head (48) includes pick up units mounted on opposed sides of said head (48) whereby articles of different orientation can be removed.

3. The molding machine of claim 1 in which said head (48) is formed with a single pick up means operable to remove articles at a plurality of stations (A, B) and in the same article orientation.

4. The molding machine of claim 1 in which said first axis corresponds to the axis of said machine and the second axis corresponds to a path generally transverse to said first axis.

5. The molding machine of claim 4 in which said axis of said machine is a longidudinal axis.

## Patentansprüche

1. Spritzgießmaschine mit wenigstens zwei Formstationen (A, B) , wobei jede Formstation (A, B) ein Plattenpaar (24, 26 und 27) beinhaltet, um Formenhälften (18, 19, 21, 22) anzutreiben, damit diese sich in sequentieller Weise öffnen und schließen, und einer Entnahmeelement (44 - 49, 109, 111) für den geformten Gegenstand, und mit
einem Maschinenrahmen (31),
einem ersten Teil (44), welches beweglich an dem Rahmen (31) befestigt ist,
Mittel zum Bewegen des ersten Teiles (44) vor und zurück relativ zu dem Rahmen (31) in Bezug auf wenigstens eine erste Achse,
einen zweiten Teil (49), welches bewegbar am ersten Teil (44) befestigt ist,
Mittel zum Bewegen des zweiten Teils (49) vor und zurück relativ zu dem ersten Teil (44) in Bezug auf wenigstens eine zweite Achse,
ein Entnahmekopf (48) für den geformten Gegenstand, welcher fest mit dem zweiten Teil (49) verbunden ist, und mit
Mittel zum Bewegen des ersten und zweiten Teils (44, 49) relativ zu der Maschine und relativ zueinander entlang der ersten und zweiten Achse und zum Positionieren des Entnahmekopfes (48) für den Gegenstand in Übereinstimmung mit dem Öffnungs- und Schliessungszylklus der Formstationen (A, B), welche unabhängig voneinander betrieben werden können,
wobei der Entnahmekopf (48) in wenigstens eine offene Form (16, 17) einfährt und danach so positioniert ist, um in eine andere nachfolgend offene Formstation einzufahren und diese zu entladen.

2. Formmaschine nach Anspruch 1, in welcher der Kopf (48) Abnahmeeinheiten aufweist, welche auf gegenüberliegenden Seite des Kopfes (48) angeordnet sind, wobei Gegenstände mit verschiedener Ausrichtung entfernt werden können.

3. Formmaschine nach Anspruch 1, in welcher der Kopf (48) mit einem einzigen Aufnahmemittel versehen ist, welches dazu geeignet ist, um Gegenstände aus einer Vielzahl von Stationen (A, B) und in der selbe Ausrichtung des Gegenstands zu entnehmen.

4. Formmaschine nach Anspruch 1, in welcher die erste Achse mit der Achse der Maschine übereinstimmt und die zweite Achse mit einem Weg übereinstimmt, welcher im wesentlichen quer zu der ersten Achse verläuft.

5. Formmaschine nach Anspruch 4, in welcher die Achse der Maschine eine Längsachse darstellt.

## Revendications

1. Machine de moulage par injection comportant au moins deux postes de moulage (A, B), chaque poste de moulage (A, B) comprenant une paire de platines (24, 26 et 27) pour actionner des moitiés de moule (18, 19, 21, 22) de façon qu'elles s'ouvrent et se ferment séquentiellement, et un module d'extraction d'articles moulés (44-49, 109, 111), comprenant :
- un châssis de machine (31),
- un premier élément (44) monté de manière à pouvoir se déplacer sur le châssis (31),
- des moyens pour faire aller et venir le premier élément (44) par rapport au châssis (31) et par rapport à au moins un premier axe,
- un second élément (49) monté de manière à pouvoir se déplacer sur le premier élément (44),
- des moyens pour faire aller et venir le second élément (49) par rapport au premier élément (44) et par rapport à au moins un second axe,
- une tête d'extraction d'articles moulés (48) montée de façon fixe sur le second élément (49), et
- des moyens pour déplacer le premier élément (44) et le second élément (49) par rapport à la machine et l'un par rapport à l'autre le long du premier axe et du second axe, et pour positionner la tête d'extraction d'articles (48) en synchronisme avec le cycle d'ouverture et de fermeture des postes de moulage (A, B), qui peuvent s'ouvrir indépendamment l'un de l'autre, de façon que la tête d'extraction (48) pénètre dans au moins un moule ouvert (16, 17) puis soit ensuite positionnée en coïncidence pour pénétrer dans un autre poste de moulage ouvert ensuite, et pour le décharger.

2. Machine de moulage selon la revendication 1,
dans laquelle
la tête (48) comprend des modules d'enlèvement montés des deux côtés opposés de la tête (48) de façon qu'on puisse enlever des articles de différentes orientations.

3. Machine de moulage selon la revendication 1,
dans laquelle
la tête (48) est munie d'un seul moyen d'enlèvement pouvant fonctionner pour enlever les articles dans un certain nombre de postes (A, B) et dans la même orientation d'article.

4. Machine de moulage selon la revendication 1,
dans laquelle
le premier axe correspond à l'axe de la machine tandis que le second axe correspond à un chemin généralement transversal par rapport au premier axe.

5. Machine de moulage selon la revendication 4,
dans laquelle
l'axe de la machine est un axe longitudinal.
